# EUROPEAN PATENT SPECIFICATION

(11) **EP 4 171 436 B1**
(45) Date of publication and mention of the grant of the patent: **29.01.2025**
(21) Application number: 21742515.6
(22) Date of filing: 28.06.2021
(51) Int. Cl.: A61C 13/265

(54) **DENTAL DEVICE**
DENTALVORRICHTUNG
DISPOSITIF DENTAIRE

(30) Priority: 29.06.2020 IT 202000015652
(43) Date of publication of application: 03.05.2023
(73) Proprietor: Di Edoardo, Emanuele, 20010 Pregnana Milanese (MI) (IT); Muggia, Davide, 29016 Cortemaggiore (PC) (IT); Maet Sagl, 6830 Chiasso (CH)
(72) Inventor: MASSANO, Daniele, 6900 Paradiso (CH)
(74) Representative: Lunati & Mazzoni S.r.L.
(86) International application number: PCT/IB2021/055738
(87) International publication number: WO 2022/003523

(56) References cited:
- EP-A1- 1 018 319
- WO-A1-93/20773

## Description

The present invention relates to a dental device of the type specified in the preamble of the first claim.

In particular, the present invention relates to a dental device in use on users who need dental prostheses and which is located both in the field of implantology with fixed prostheses and in the field of implantology with mobile prostheses.

As is known, in the dental field, prostheses are suitable for morpho-functional rehabilitation of dental arches with single, multiple or total edentulous.

In particular, in the dental field, the fixed prosthesis can be cemented to the stump screwed to the osseo-integrated implant, but it can also be screwed directly to the same implant.

The fixed prosthesis on implants, starting from the eighties, that is, since modern implantology with Branemark's studies has existed, has essentially never been modified while maintaining the fixing constraint, through cementation or screwing, with exclusively implant support and absolutely not gingival.

The known art described includes some important drawbacks.

The current fixing technique of screwed or cemented prosthetic parts present some operational criticalities. In fact, it often does not allow the operator to easily remove the prosthetic structures fixed to the implants since, in order to disassemble a tooth cemented to the stump screwed to the implant, it is necessary to use extractors configured to hammer the prosthetic part causing, sometimes, the fracture of the same prosthesis and therefore causing substantial damage.

With particular reference to the technique with fixed implant type prostheses of the all-on-four type, although the techniques of implant insertion have changed since Branemark in Malò, the methods of fixing the prostheses to the implants have remained unchanged and, in this case, substantially made by mechanical screw joints.

Therefore, the prostheses also known as Toronto, not only have not had an effective evolution, but have remained linked to the old drawbacks.

In detail, all-on-four type prostheses do not allow the user to have adequate home hygiene, often leading to peri-implantitis that cause the loss of implant posts.

Furthermore, from a dental point of view, the fixation of the all-on-four prosthesis is universally performed with titanium micro-screws which, due to the mechanical stress to which they are subjected, often break, creating significant problems for the clinician and, consequently, for the patient or user.

Furthermore, this prosthetic rehabilitation induces the user to go to the clinic every six months for maintenance purposes. The apparatuses known to the current state of the art must, in fact, be disassembled in such a way as to release the prosthesis and be able to clean it, especially in reference to the areas that it is impossible for the user to reach.

In these areas, if proper and timely maintenance is not carried out, peri-implant inflammations are often observed due, for example, to accumulations of food, plaque and tartar.

These drawbacks are therefore connected to the fact that the user cannot remove the prosthesis alone but needs a specialized dentist with the further consequence that, in the event of mechanical breakage of the prosthesis, the user's life is conditioned, having to contact a specialized structure.

This need gives rise to inconvenience both to the user who is conditioned in his daily life and to the operators who have to face immediate emergencies.

However, devices are known which implement particular couplings between the dental prosthesis and the implant. In particular, some devices include magnetic couplings designed to allow the coupling and uncoupling of the prosthesis from the implant by applying a pre-determined separation force, or by applying external tools that cancel the external magnetic attraction force.

Among the various devices that adopt more complicated solutions is the device described in US-B-6171107 patent. The latter basically describes an implant on which a prosthesis of a tooth shaped as the coupling portion of the implant can be housed, wherein the implant includes two cursors housed inside guides and pushed outwards through springs. The prosthesis therefore includes cavities suitable for housing at least part of the cursors. Basically, therefore, the coupling is achieved by the repulsion force produced by the springs that push the cursors into the cavities made in the prosthesis.

The devices just described also have important drawbacks.

In devices that include pure magnetic couplings, the magnets must be made with particular geometries in order to stabilize the prosthesis on the implant. Furthermore, the magnetic coupling force must be very high since the dentition can withstand high loads during, for example, chewing.

As far as the device described in US-B-6171107 is concerned, the aforementioned drawbacks are substantially solved by the fact that the sliders block the prosthesis in a direction parallel to the gum. However, there are other important drawbacks. In particular, the prosthesis must necessarily be hollowed out to allow containment of the portion of the implant suitable for making the coupling. Furthermore, the prosthesis must include further cavities suitable for allowing the housing of the sliders. These characteristics imply high processing times and costs.

Furthermore, the fact of including springs of extremely reduced dimensions entails not only high costs for the production of the prostheses, but also a higher probability of breaking the device.

The major drawback is, however, given by the fact that for both coupling and uncoupling it is necessary to place two magnets side by side on the front and rear side of the prosthesis, which allow the constraint created by the springs to be resolved. Basically, in fact, the sliders are magnetized so that, when approached to external magnets, they can be subjected to a magnetic force that is opposite and greater than the elastic force of the spring. In this way, the cursors can be retracted within their guides, removing the bond between the prosthesis and the implant.

Therefore, these measures imply that the device described in US-B-6171107 prevents the coupling and uncoupling of the prosthesis and implant in a short time. Basically, in this sense, the drawbacks of the device still include the known drawbacks for common mechanical connections in terms of maintenance.

The mobile dental or dental prosthesis, on the other hand, generally consists of a partial or complete dental arch configured to be hooked onto intraosseous pins in a usually mechanical manner.

Such prostheses, also known as overdentures or skeletons, have the important drawback of being sometimes difficult to remove or, vice versa, of detaching without warning in the face of too high stresses.

In order to try to overcome these drawbacks and to make the assembly and disassembly of the mobile prosthesis quick, some particular devices have been developed.

Patent documents DE-A-3431190, DE-U-8803488 and US-A-4911640 describe mobile dental devices including magnetic coupling mechanisms.

WO 93/20773 A1 describes a dental implant whose coronal portion can be easily attached or detached to or from a lower portion of the implant by screwing or unscrewing a fastening element locking or unlocking the coronal portion into position insider the lower portion of the implant, wherein the locking is performed by elastic deformation of the lower end of the coronal portion inside the lower portion of the implant.

These mechanisms substantially make use of a coupling given by the magnetic attraction force in collaboration with the shoulders of the mobile prosthesis and possibly additional elements such as springs or other.

However, none of these devices allows to realize a stable and firm coupling, capable of avoiding the undesired detachment of the mobile prosthesis in situations wherein the prosthesis itself is subjected to high stresses.

Therefore, the described mechanisms are not advantageous to the point of being able to allow an efficient and safe replacement of the mechanical joints typical of common mobile prostheses or they may have substantially very similar drawbacks. **In** addition, the removable prostheses that adopt conventional solutions, including pins suitable to allow the constraining of caps or rubberized gaskets, are often subject to breakage or require a high maintenance to ensure the maintenance of a high efficiency.

**In** this situation, the technical task underlying the present invention is to devise a dental device capable of substantially obviating at least part of the aforementioned drawbacks.

Within the scope of said technical task, it is an important object of the invention to obtain a dental device which has a fastening solution for the dental prosthesis which is advanced with respect to the known techniques taught starting from Branemark in Malò.

In particular, it is important that the aforesaid technical task be solved by allowing a device to be produced which describes a relatively simple structure, which is very stable and which reduces the number of components necessary for its construction. Another important object of the invention is to provide a dental device which allows easy assembly and disassembly of dental prostheses from implant posts or similar structures or even from the intraosseous cavities themselves.

As a consequence of what has been said, a further object of the invention is to provide a device which allows a user to remove the prosthesis in total autonomy for maintenance purposes, while maintaining the same functional effectiveness of the fixed prosthesis.

Therefore, a further object of the invention is to obtain a dental device which reduces the complications due to emergencies inherent in any breakages or infections deriving from the use of the known technique.

In conclusion, a further task of the invention is to provide a dental device whose peculiar characteristics can be equivalently adopted in different configurations, which involve the couplings of different parts of the prostheses and which can be efficiently adopted both for fixed prostheses and for movable prostheses.

The technical task and the specified aims are achieved by a dental device as claimed in the attached claim 1.

The characteristics and advantages of the invention are clarified below by the detailed description of preferred embodiments of the invention, with reference to the accompanying figures, wherein:
the **Fig. 1a** shows a view in longitudinal section of a dental device according to the invention in a first embodiment wherein the second portion is constituted by the support and wherein the movable element is expanded and is blocked by the obstacle;
the **Fig. 1b** illustrates a longitudinal sectional view of the dental device of Fig. 1a in which the movable member is retracted and the first portion can be removed from the second portion;
the **Fig. 2a** is a longitudinal sectional view of the first portion of the dental device of Figs. 1a-1b wherein the movable element is expanded;
the **Fig. 2b** is a view in longitudinal section of the first portion of the dental device of the Figs. 1a-1b wherein the movable element is retracted;
the **Fig. 3** shows a longitudinal sectional view of the second portion of the dental device of the Figs. 1a-1b coinciding with the support;
the **Fig. 4a** shows a view in longitudinal section of a dental device according to the invention in a second embodiment wherein the second portion is capable of being constrained to a support and wherein the movable element is expanded and is locked by the obstacle;
the **Fig. 4b** is a longitudinal sectional view of the dental device of Fig. 4a wherein the movable element is retracted and the first portion can be removed from the second portion;
the **Fig. 5** is a longitudinal sectional view of the second portion of the dental device of the Figs. 4a-4b;
the **Fig. 6a** shows a view in longitudinal section of the first portion of the dental device of the Figs. 4a-4b wherein the movable element is expanded;
the **Fig. 6b** illustrates a view in longitudinal section of the first portion of the dental device of the Figs. 4a-4b wherein the movable element is retracted;
the **Fig. 7a** is a longitudinal sectional view of a dental device according to the invention in a third embodiment wherein the second portion is capable of being constrained to a support and wherein the movable element is expanded and is locked by the obstacle;
the **Fig. 7b** represents a longitudinal sectional view of the dental device of Fig. 7a wherein the movable element is retracted and the first portion can be removed from the second portion;
the **Fig. 8** shows a longitudinal sectional view of the second portion of the dental device of the Figs. 7a-7b;
the **Fig. 9a** shows a view in longitudinal section of the first portion of the dental device of the Figs. 7a-7b wherein the movable element is expanded; and
the **Fig. 9b** is a view in longitudinal section of the first portion of the dental device of the Figs. 7a-7b wherein the movable element is retracted.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the figures, the dental device according to the invention is globally indicated with the number 1.

The dental device 1 is substantially capable of allowing the rehabilitation of at least part of the edentulous dental arches.

In detail, it can be part of either a fixed or implant prosthesis or a removable prosthesis, also known as an overdenture or skeletal prosthesis.

In this regard, the device 1 can partially include implant or skeletal parts known to the state of the art.

In any case, the device 1 preferably comprises at least one base 2.

The base 2 is substantially the part of the device which connects the osseous portion, for example in particular mandibular or maxillary, of a user to the artificial dentition.

Preferably, therefore, the base comprises at least a first portion 20 and a second portion 21.

The portions 20, 21 are configured to be mutually connected or disconnected in such a way as to allow the engagement or removal of an artificial dentition from an osseous portion.

Furthermore, the base 2 preferably defines a main axis 2a.

The main axis 2a is substantially the prevailing expansion axis of the base 2.

It is therefore, in addition, preferably the axis along which the portions 20, 21 can realize the constraint and the release.

Therefore, preferably, the portions 20, 21 are distributed along the main axis 2a from the osseous portion to the artificial dentition or vice versa.

Preferably, one of the portions 20, 21 is configured to be constrained directly or indirectly to the osseous portion of a user, the other of the portions 20, 21 is instead configured to be constrained to one or more teeth 3 artificial or even natural.

The teeth 3 can be single teeth or can be in a greater number and define parts of an arch, or even a complete arch.

Furthermore, the portion 20 or 21 on which the one or more teeth 3 are constrained can also include other portions, for example artificial gingival partitions typical of overdenture implants or, simply, of common movable prostheses.

As regards the constraint with the osseous portion, the portion 20 or 21 can be directly constrained to it, as typically occurs for intraosseous supports in implant systems, for example of the all-on-four type; or it can be constrained indirectly through intermediate systems. In this sense, the portion 20 or 21 could be configured to be attached to an element constrained to the bone portion and not directly constrained therein.

The device 1 according to the invention can be configured in different ways.

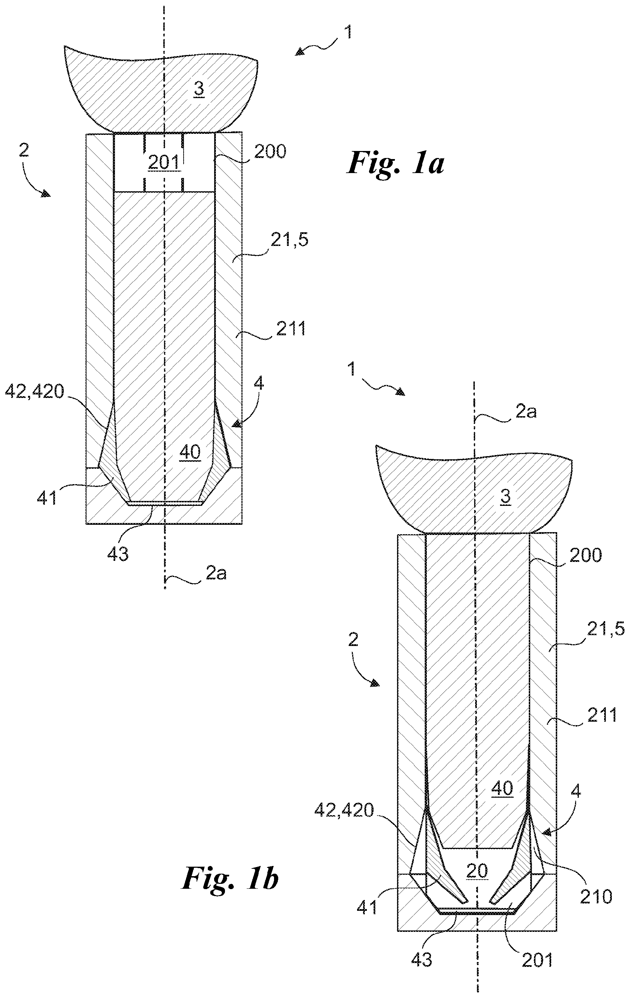

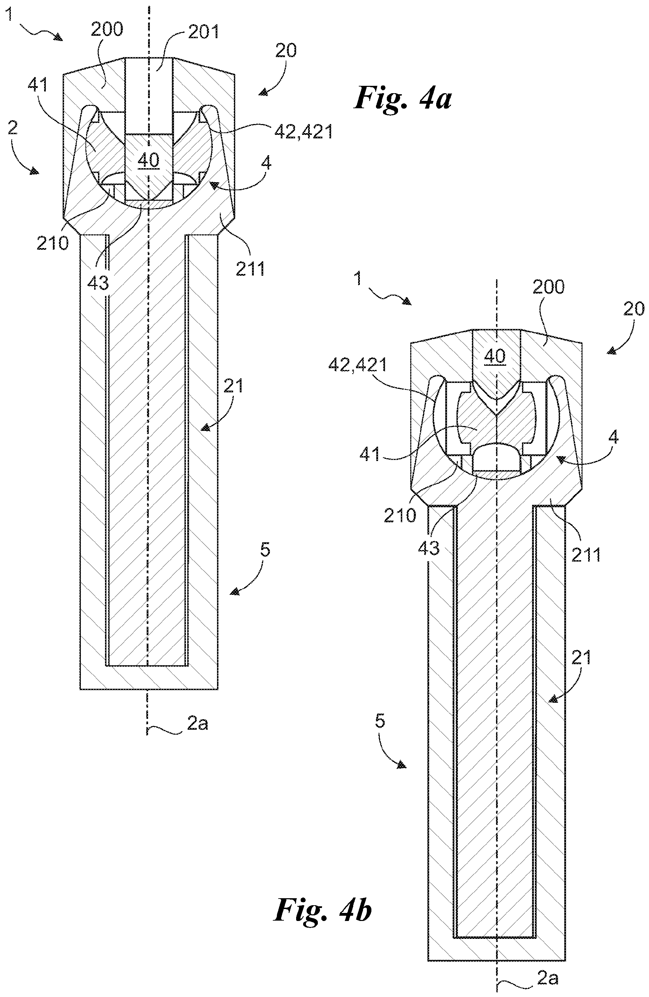

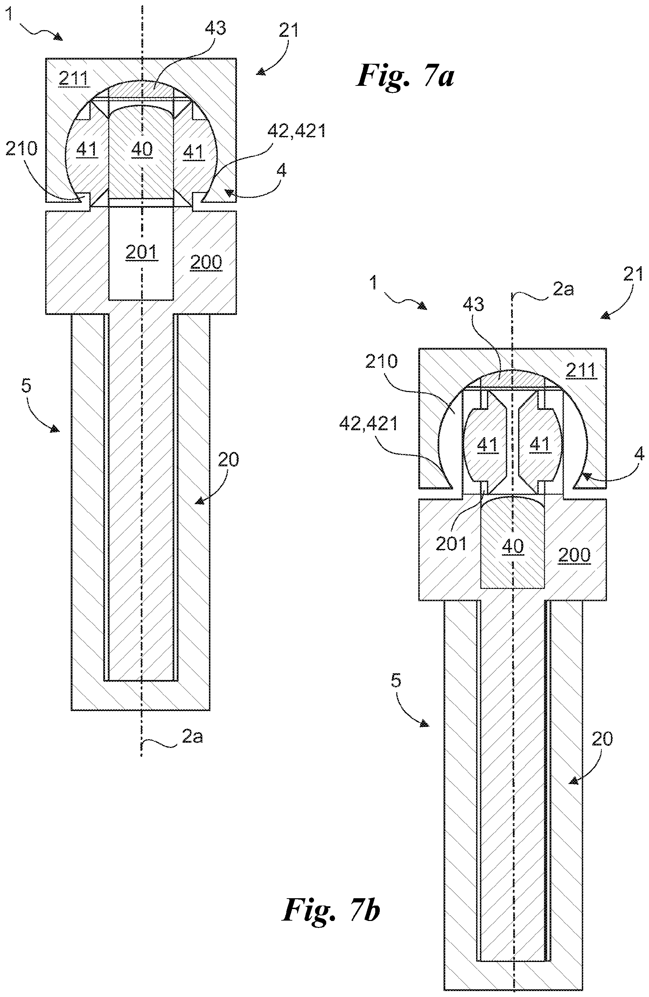

For example, in more detail, the one or more teeth 3 can be constrained to the first portion 20 and the second portion 21 can be constrained directly, as shown in the Figs. 1a-1b, or indirectly, as shown in the Figs. 4a-4b, on the osseous portion. Alternatively, the one or more teeth 3 can be constrained to the first portion 20 and the second portion 21 can be constrained directly or indirectly, as shown in the Figs. 7a-7b, on the osseous portion.

The device 1 therefore comprises constraint means 4.

The constraint means 4 are capable of mutually constraining, on command, the portions 20, 21.

Therefore, the constraining means 4 define at least one constraint configuration and a rest configuration.

In the constraint configuration the first portion 20 and the second portion 21 are mutually stably constrained.

In the rest configuration, the first portion 20 and the second portion 21 are mutually separable. In particular, as previously mentioned, the first portion 20 and the second portion 21 can be separated at least along the main axis 2a.

Advantageously, the constraint means 4 include some particular expedients.

Essentially, the constraint means 4 comprise a slider 40, a movable element 41 and an obstacle 42.

The slider 40 is a wedge-shaped element. The term wedge means that along its extension the slider 40 comprises a tip area wherein the normal section narrows. This tip area can therefore be sharp or even rounded.

The slider 40 is also movable along the main axis 2a. The movement of the slider 40, in particular, determines the configurations of the constraint means 4. The latter, in fact, define the constrain and rest configuration based on the positioning of the slider 40 with respect to the main axis 2a.

The slider 40 therefore comprises at least in part ferromagnetic material. The ferromagnetic material allows the slider 40 to be magnetized on command so as to be able to move the slider 40, again on command. In fact, when the slider 40 is subjected to an external magnetic field, it can react, based on the polarity, moving along the main axis 2a.

The slider 40 also includes a permanent magnet.

The slider 40 is, therefore, capable of interacting with the movable element 41.

The movable element 41 is at least partly counter-shaped to the slider 40. This does not mean that the movable element 41 must have exactly at least part of the same shape as the slider 40, but it means that it preferably has a shape suitable for the interaction with the slider 40.

In particular, the movable element 40 defines surfaces suitable for interacting with the tip area of the slider 40 so that the slider 40 succeeds, by pushing on the interaction surface of the movable element 40, to deform or move the movable element 41.

The movable element 41 is, therefore, expandable with respect to the main axis 2a when pushed by the slider 40 in the constraint configuration.

Therefore, the movable element 41 is configured to occupy a greater space when dilated by the slider 40.

Such a movable element 41 could include a deformable annular element, for example rubber, or it could include one or more fins, even rigid, radially movable with respect to the main axis 2a. Or even barrel elements capable of translating radially with respect to the main axis 2a.

Basically, the movable element 41 and the slider 40 define a configuration similar to that of a mandrel wherein a radial element or more radial elements can expand, or move radially with respect to the main axis 2a in such a way as to expand or restrict the section perpendicular to the main axis 2a.

The obstacle 42 is, therefore, configured to interfere with the movable element 41 when the constraint means are in the constraint configuration.

In particular, the obstacle 42 is configured to block the mutual translation of the portions 20, 21 along the main axis 2a. This means that, for example, the obstacle could be configured to hinder only the translation along the main axis 2a and could, instead, allow other movements such as, for example, rotation around an axis, possibly also on the same main axis 2a.

The slider 40 and the movable element 41 are arranged on the first portion 20, while the obstacle 42 is arranged on the second portion 21.

More in detail, from a structural point of view, the portions 20, 21 can be made according to various embodiments.

Preferably, in general, the first portion 20 comprises at least a first body 200.

The first body 200 is substantially the part of the first portion which contains at least the slider 40 and the movable element 41.

The first body 200 can also be of the elongated type, it can have threads suitable for allowing the first portion 20 to be constrained in the implant base of a conventional fixed implant, or it can have a simple shape, for example approximately capsular, typical of the bases on which the teeth are arranged, for example, in fixed implants.

In general, preferably, the first body 200 includes at least one guide 201. The guide 201 is substantially a cavity inside which the cursor 40 can slide. This guide 201 can be not accessible from the outside, or it can also be accessible from the outside in such a way as to allow the insertion and extraction of the slider 40 from the entire base 20.

The first body 200 can also define radial holes, with respect to the main axis 2a, suitable for allowing the expansion of the movable element 41. Of course, alternatively, the first body 200 could also include a deformable portion able to be deformed by the movable elements 41, or the movable elements 41 could be incorporated in the first body 200 and able to deform, as the slider 40 passes, integrally with the first body 200.

The second portion 21, moreover, it can in turn comprise a second body 211.

The second body 211 can assume various geometries. For example, the second body 211 can have an elongated shape and have threads suitable for allowing the second portion 21 to be constrained in the implant base of a conventional fixed implant. Or, exactly like the first body 200, it can have a capsular shape and be able to allow the constraint of one or more teeth 3. Basically, the first portion 20 and the second portion 21 are interchangeable inside the device 1 in the sense which can be equivalently positioned one way or the other.

The second portion 21 also comprises a cavity 210.

The cavity 210 extends at least in part along the main axis 2a. Moreover, in particular, the cavity 210 is configured to house at least part of the first portion 20.

Even more in detail, the obstacle 42 is preferably included within the cavity 210 and can, indeed, be determined by the geometry of the cavity 210 itself.

For example, the obstacle 42 may consist of a conical partition **420.**

The conical partition 420, if present, is preferably convergent, with respect to the main axis 2a, towards the opening of the cavity 210. In other words, the conical partition 420 determines a narrowing of section, perpendicular to the main axis 2a, towards the 'opening.

For example, in this regard, the cavity 210 can have a cylindrical shape wherein the obstacle 42 determines a narrowing of the section.

Alternatively, the obstacle 42 can also consist of a spherical segment **421.**

The spherical segment 421, if present, is preferably convergent, with respect to the main axis 2a, towards the opening of the cavity 210. In other words, also the spherical segment 421 can determine a narrowing of section, perpendicular to the main axis 2a, towards the opening.

In this sense the cavity 210 can define a spherical cap shape and the spherical segment 421 can be a portion of it.

In some embodiments, moreover, it is preferable that the cavity 210 defines at least one non-circular section along a plane perpendicular to the main axis 2a.

By non-circular section we mean any section that does not define a circle, therefore an elliptical, triangular or quadrangular section or something else.

The first portion 20, in turn, is preferable to define a section along a plane perpendicular to the main axis 2a at least partially counter-shaped to the cavity 210. In this way, the interaction between the first portion 20 and the cavity 210 a non-circular section allows to block the reciprocal rotation of the portions 20, 21 with respect to the main axis 2a.

The constraint means 4 as previously described do not require additional components.

However, advantageously, the fastening means 4 can include further components. Preferably, the constraint means 4 comprise at least one thrust element **43.**

The thrust element 43 is configured to realize a thrust force on the slider 40 in such a way that the constraint means 4 pass from the rest configuration to the constraint configuration.

In other words, the thrust element 43 is preferably configured, if present, to push the slider 40 to interact with the movable element 41, or to cause the movable element 41 to expand.

Preferably, the thrust force it is parallel to the main axis 2a.

This thrust force can therefore be of various types.

The thrust force can be an elastic force and the thrust element 43 can be an elastic component, such as a spring or an elastomer, capable of pushing the slider 40. Or, the thrust element 43 can be a component configured to realize a magnetic force on the slider 40. Therefore, preferably, the slider 40 can at least partially include ferromagnetic material.

For example, the slider 40 may include a ferromagnetic inner part covered with a coating of a different material.

The thrust element 43 can also be arranged both on the first portion 20 and on the second portion 21. In fact, the thrust element 43 can act constantly on the slider 40, for example if arranged on the first portion 20, or it can act when the first portion 20 is approached to the second portion 21, if arranged on the second portion 21.

Or again, the thrust element 43 can be removable with respect to the first or second portion 20, 21 in such a way as to realize the force of thrust on slider 40 in a controlled manner.

Furthermore, since the parts of the constraint means 4 are movable, it is preferable that the device 1 includes some specific expedients, which are useful even if not necessary.

In particular, preferably, one or more of the slider 40 and the movable element 41 comprise an external covering made at least in part of hard stone. This material is useful for reducing the friction of the slider 40 and the movable element 41.

Of course, materials with equivalent or better properties could be used to reduce the wear of the parts deriving from the friction generated by the relative movement between them.

In addition, the obstacle itself could also be partially made of hard stone. Among the possible semi-precious stones, in particular, ruby is preferably used.

The movable element 41 could in fact be free to retract and be guided, when the portions 20, 21 are in decoupling, for example from the conical partition or from the annular segment.

Alternatively, the movable element 41 could, at the same time, be configured to retract against opposing means, for example springs or similar, and the obstacle 62 could then include linings to reduce friction.

Or again, the movable element 41 could be configured to expand in opposition to opposing means. In the latter case, the thrust force should be such as to overcome at least the elastic return force of the opposing means which opposes the expansion of the movable element 41.

In conclusion, the device 1 can comprise a support 5.

The support 5 is substantially constrained to an osseous portion of a user. Therefore, the support 5 is an element which extends prevalently along the main axis 2a, when the device 1 is in use, and which is fixed to the osseous portion of the user.

The second portion 21 can therefore be configured to be constrained on the support 5, for example by means of threads as occurs in common fixed prostheses of the known art.

Or, the second portion 21 can be constituted by the same support 5.

In this case, the support 5 can include the cavity 210 and can be configured to directly house the first portion 20.

In a further possible embodiment, the support 5 can also be configured to constrain the first portion 20. The latter can also provide threaded parts or other parts suitable for allowing the constraint.

All the characteristics described above can be combined as desired and can also be adopted both for the constraint of movable or removable prostheses, as well as fixed or implant prostheses.

Some embodiments are, however, described below by way of example.

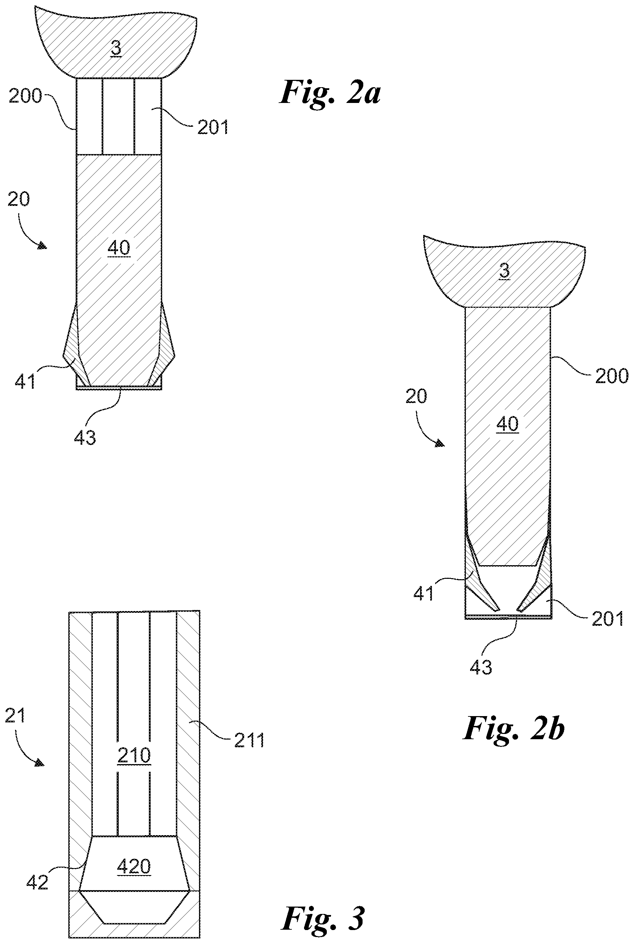

In a first embodiment, shown in the Figs. 1a-3, the second portion 21 coincides with the support element 5. Furthermore, the one or more teeth 3 are constrained to the first portion 20 in a removable or even fixed manner.

The body 200 of the first portion 20 is elongated and includes a slider 40 which extends over most of the body 200 itself. Of course, the slider 40 could also be smaller in size.

In the first embodiment, the movable element 41 includes a plurality of rigid fins, for example made of diamond, suitable for striking the obstacle 42 when the constraint means 4 passes from the rest configuration to the constraint configuration.

The cavity 210, in this example, defines a section between the obstacle 42 and the substantially octagonal opening, that is, not circular. The first portion 20, in particular the body 200, also defines an octagonal section in such a way as to avoid rotations around the main axis 2a of the first portion 20 with respect to the second portion 21. The thrust element 43 is, therefore, disposed on the bottom of the first portion 20, but could equally be housed on the bottom of the cavity 210, or rather in the second portion 21 or in the support 5.

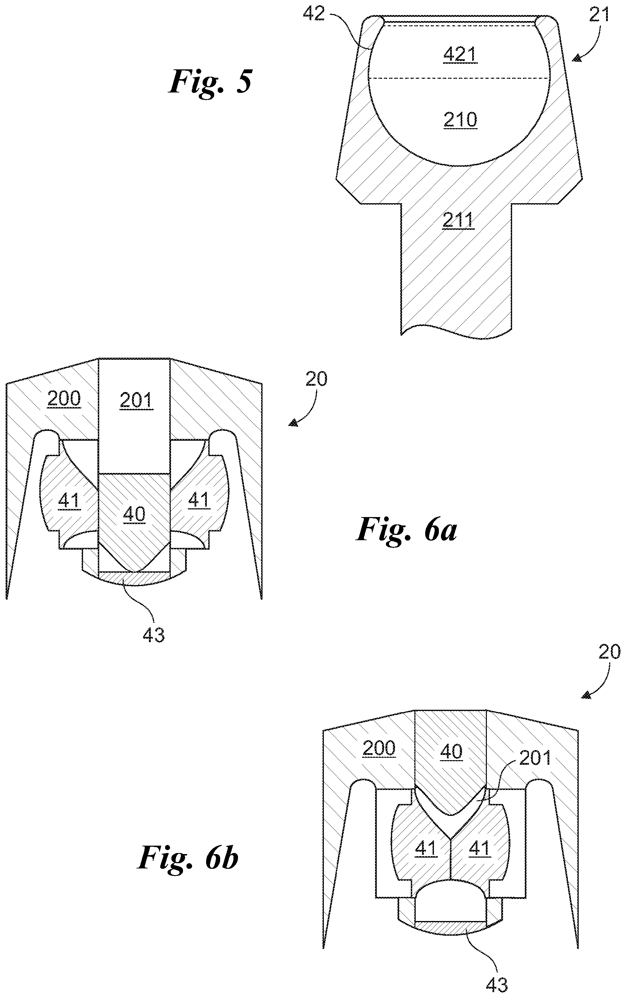

In a second embodiment, shown in the Figs. 4a-6b, the second portion 21 is configured to be constrained on the support 5. Furthermore, the cavity 210 has a substantially spherical cap shape and the obstacle 42 is a spherical segment of the cap.

The movable element 41 includes a plurality of barrel components. Furthermore, in this embodiment example, the first portion 20 also includes the thrust element 43. As already mentioned, the thrust element 43 can likewise be disposed on the bottom of the cavity 210.

Furthermore, also the same slider 40 it could be extracted from the first portion 20 and inserted only during the coupling phase.

Furthermore, preferably, the first portion 20 defines an M-shaped section along a plane parallel to the main axis 2a. The second portion 21 therefore defines a U-shaped section converging towards the main axis 2a and substantially counter-shaped to the first portion 20.

In this way, the portions 20, 21 allow the mutual locking, on each axis, of the portions 20, 21.

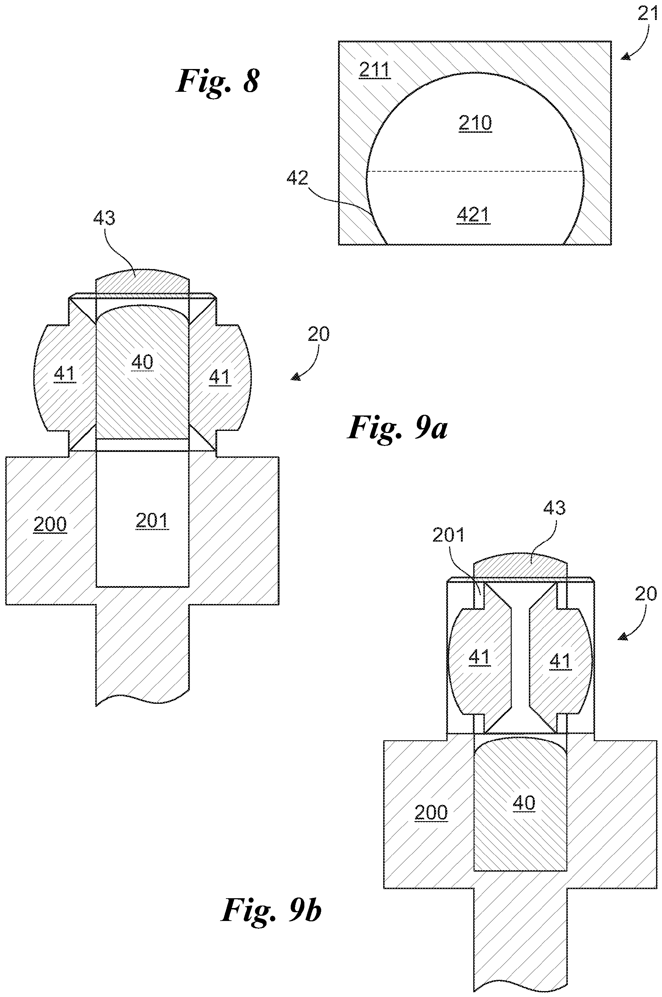

In a third embodiment, shown in the Figs. 7a-9b, the first portion 20 is configured to be constrained on the support 5. Furthermore, also in this case, the cavity 210 has a substantially spherical cap shape and the obstacle 42 is a spherical segment of the cap.

The movable element 41 includes a plurality of barrel components. Furthermore, in this embodiment example, the first portion 20 also includes the thrust element 43. As already mentioned, the thrust element 43 can likewise be disposed on top of the cavity 210.

The first and second forms of realization are particularly efficient examples for fixed type prostheses. The third embodiment is a particularly efficient example for removable prostheses.

However, nothing prevents the adoption of first and second embodiments for mobile prosthesis or third embodiments for fixed prostheses.

Preferably, especially when the device 1 is adopted to constrain removable prostheses to osseous portions, the portions 20, 21 are configured not to be rigidly blocked, but may have slits, or portions in which the portions 20, 21 are not mutually in contact, as in the Figs. 7a-7b, in such a way to allow small reciprocal rotations of the portions 20, 21 and to reduce the possibility of breakage of the prostheses.

The operation of the dental device 1 previously described in structural terms is as follows.

The dental device 1 can be fixed to an osseous portion, in a stable manner, by bringing the constraint means 4 from the rest configuration to the constraint configuration by means of the thrust element 43 or also by means of the adoption of an external magnetic field. Furthermore, the dental device can be easily removed, solving the constraint by bringing the constraint means 4 from the constraint configuration to the rest configuration, for example by adopting external magnetic fields which move the slider 40 away from the movable element 41.

A new method for attaching or releasing the dental device 1 on an osseous portion is also disclosed, wherein the method does not form part of the claimed invention.

In particular, the method substantially comprises positioning the first portion 20 within the second portion 21, or vice versa. Furthermore, the device 1 can provide that the constraint means 4 pass autonomously to the constraint configuration, or it can include a positioning phase wherein, by adopting an external magnetic field, the slider 40 is pushed to interact with the movable element 41 and the constraint means 4 pass from the rest configuration to the constraint configuration.

Furthermore, in the release phase, the method includes a removal phase wherein, by adopting an external magnetic field, preferably configured to generate a magnetic force along the main axis 2a, the slider 40 is pushed away from the movable element 41 so as to such as to allow the extraction of the first portion 20 from the second portion 21, or vice versa.

The dental device 1 according to the invention achieves important advantages.

In fact, the dental device 1 defines a fixation solution for the dental prosthesis which is evolved with respect to the known techniques taught, for example starting from Branemark in Malò, as regards fixed prostheses, but also with regard to mobile prostheses.

The device 1 also has a relatively simple structure, which is very stable and which reduces the number of components necessary for its realization. In fact, no elastic means are required, for example springs, which are very expensive and can easily break during the use of the device 1.

The assembly and disassembly of the prosthesis with respect to the osseous portion is also extremely facilitated. Therefore, the dental device 1 also allows the user to facilitate the removal of the prosthesis which can therefore take place in total autonomy.

In other words, the maintenance of the prosthesis is facilitated in such a way as to be able to maintain a high functional efficacy.

Furthermore, the dental device 1 reduces the complications due to emergencies inherent in any breakages or infections deriving from use.

In conclusion, the device 1 is extremely versatile since it can be effectively used both to make fixed prostheses and to make mobile prostheses.

In particular, when used for removable prostheses, the device 1 allows to avoid the use of rubberized gaskets for the coupling of the portions, reducing the possibility of wear of the components that make the constraint and significantly improving the duration of the prosthesis.

The invention is susceptible of variants falling within the scope of the inventive concept defined by the claims.

In this context, all the details can be replaced by equivalent elements and the materials, shapes and dimensions can be any.

## Claims

1. Dental device (1) comprising at least:
- a base (2) defining a main axis (2a) and including at least a first portion (20) and a second portion (21), one of which is configured to be constrained directly or indirectly on of an osseous portion of a user and the other being configured to be constrained to one or more teeth (3),
- constraint means (4) defining at least one constraint configuration wherein said first portion (20) and said second portion (21) are mutually constrained, a rest configuration wherein said first portion (20) and said second portion (21) are separable at least along said main axis (2a), and comprising at least:
- a wedge-shaped slider (40) comprising at least partly ferromagnetic material and movable along said main axis (2a) in such a way as to determine, on the basis of its positioning, said rest configuration and said constraint configuration,
- a movable element (41) at least partially counter-shaped to said slider (40) and expandable radially with respect to said main axis (2a) when pushed by said slider (40) in said constraint configuration, and
- an obstacle (42) configured to interfere with said movable element (41) when said constraining means (4) are in a constraining configuration in such a way as to block the reciprocal translation of said portions (20, 21) along said main axis (2a),
- said slider (40) and said movable element (41) being arranged on said first portion (20) and said obstacle (42) being arranged on said second portion (21),
and said device (1) being **characterized in that**
- said slider (40) includes a permanent magnet.

2. Device (1) according to claim 1, wherein said constraint means (4) comprise at least one thrust element (43) configured to made a thrust force on said slider (40) in such a manner that said constraint means (4) pass from said rest configuration to said constraint configuration.

3. Device (1) according to the preceding claim, wherein said thrust element (43) produces a magnetic force on said slider (40) and is disposed on one of said portions (20, 21).

4. Device (1) according to any one of the preceding claims, wherein one or more of said slider (40) and said movable element (41) comprise an outer coating made at least partially in hard stone to reduce the friction between said slider (40) and said movable element (41).

5. Device (1) according to any one of the preceding claims, wherein said second portion (21) includes a cavity (210) extending at least partly along said main axis (2a) and configured to accommodate at least part of said first portion (20) and said obstacle (42) is included within said cavity (210).

6. Device (1) according to any one of the preceding claims, comprising a support (5) securable to an osseous portion of a user and wherein said second portion (21) is constituted by said support (5) or is configured to be constrained to said support (5).

7. Device (1) according to the preceding claim, wherein said second portion (21) is constituted by said support (5) and said obstacle (42) is constituted by a conical partition (420) disposed within said cavity (210) and converging with respect to said main axis (2a) towards an opening of said cavity (210).

8. Device (1) according at least to claim 5, wherein said cavity (210) defines at least one spherical segment (421) and said obstacle (42) is constituted at least by said spherical segment (421) converging with respect to said main axis (2a) towards an opening of said cavity (210).

9. Device (1) according at least to claim 5, wherein said cavity (210) defines at least a non-circular cross-section along a plane perpendicular to said main axis (2a) and said first portion (20) defines a section along a plane perpendicular to said main axis (2a) at least partially counter-shaped to said cavity (210) in such a way as to block the reciprocal rotation of said portions (20, 21) with respect to said main axis (2a).

10. Device (1) according to any one of the preceding claims, wherein said one or more artificial teeth (3) are secured to said first portion (20) and said second portion (21) is constrained directly or indirectly on said osseous portion.

11. Device (1) according to any one of claims 1-10, wherein said one or more artificial teeth (3) are constrained to said second portion (21) and said first portion (20) is bound directly or indirectly on said osseous portion.

12. A prosthesis (10) including a fixed or removable device according to any one of the preceding claims.

## Patentansprüche

1. Zahnvorrichtung (1) mindestens umfassend:
- eine Basis (2), die eine Hauptachse (2a) definiert und mindestens einen ersten Abschnitt (20) und einen zweiten Abschnitt (21) umfasst, wobei einer der beiden konfiguriert ist, direkt oder indirekt an einem Knochenabschnitt eines Benutzers befestigt zu werden, und der andere konfiguriert ist, an einem oder mehreren Zähnen (3) befestigt zu werden,
- Befestigungsmittel (4), die mindestens eine Befestigungskonfiguration definieren, wobei der erste Abschnitt (20) und der zweite Abschnitt (21) gegenseitig befestigt sind, eine Ruhezustandskonfiguration, wobei der erste Abschnitt (20) und der zweite Abschnitt (21) mindestens entlang der Hauptachse (2a) trennbar sind, und mindestens umfassend
- ein keilförmiges Schiebeelement (40), das zumindest teilweise aus ferromagnetischem Material besteht und entlang der Hauptachse (2a) beweglich ist, sodass die Ruhezustandskonfiguration und die Befestigungskonfiguration, basierend auf seine Positionierung, bestimmt werden können,
- ein bewegliches Element (41), das zumindest teilweise gegenförmig zu dem Schiebelement (40) ist und radial in Bezug auf die Hauptachse (2a) dehnbar ist, wenn es durch das Schiebelement (40) in die Befestigungskonfiguration gedrückt wird, und
- ein Hindernis (42), das konfiguriert ist, mit dem beweglichen Element (41) zu interferieren, wenn sich die Befestigungsmittel (4) in der Befestigungskonfiguration befinden, um die gegenseitige Verschiebung der Abschnitte (20, 21) entlang der Hauptachse (2a) zu sperren,
- wobei das Schiebeelement (40) und das bewegliche Element (41) auf dem ersten Abschnitt (20) angeordnet sind und wobei das Hindernis (42) auf dem zweiten Abschnitt (21) angeordnet ist,
und wobei die Vorrichtung (1) **dadurch gekennzeichnet ist, dass**
- das Schiebeelement (40) einen Permanentmagneten umfasst.

2. Vorrichtung (1) nach Anspruch 1, wobei die Befestigungsmittel (4) mindestens ein Druckelement (43) umfassen, das konfiguriert ist, eine Druckkraft auf das Schiebelement (40) auszuüben, sodass die Befestigungsmittel (4) von der Ruhezustandskonfiguration zu der Befestigungskonfiguration übergehen.

3. Vorrichtung (1) nach dem vorhergehenden Anspruch, wobei das Druckelement (43) eine magnetische Kraft auf dem Schiebeelement (40) ausübt und auf einem der Abschnitte (20, 21) angeordnet ist.

4. Vorrichtung (1) nach einem der vorhergehenden Ansprüche, wobei einer oder mehrere des Schiebeelements (40) und des beweglichen Elements (41) eine äußere Beschichtung, zumindest teilweise aus Hartstein, umfassen, um die Reibung zwischen dem Schiebeelement (40) und dem beweglichen Element (41) zu reduzieren.

5. Vorrichtung (1) nach einem der vorhergehenden Ansprüche, wobei der zweite Abschnitt (21) einen Hohlraum (210) umfasst, der sich zumindest teilweise entlang der Hauptachse (2a) erstreckt und konfiguriert ist, zumindest einen Teil des ersten Abschnitts (20) aufzunehmen, und wobei das Hindernis (42) innerhalb diesem Hohlraum (210) enthalten ist.

6. Vorrichtung (1) nach einem der vorhergehenden Ansprüche, umfassend eine Halterung (5), die an einem Knochenabschnitt eines Benutzers befestigt werden kann, wobei der zweite Abschnitt (21) aus der Halterung (5) besteht oder konfiguriert ist, an der Halterung (5) befestigt zu werden.

7. Vorrichtung (1) nach dem vorhergehenden Anspruch, wobei der zweite Abschnitt (21) aus der Halterung (5) besteht und wobei das Hindernis (42) aus einer kegelförmigen Trennwand (420) besteht, die sich innerhalb dem Hohlraum (210) befindet und sich in Bezug auf die Hauptachse (2a) in einer Öffnung des Hohlraums (210) zusammenläuft.

8. Vorrichtung (1) nach mindestens Anspruch 5, wobei der Hohlraum (210) mindestens ein kugelförmiges Segment (421) definiert und wobei das Hindernis (42) mindestens aus diesem kugelförmigen Segment (421) besteht, das sich in Bezug auf die Hauptachse (2a) in einer Öffnung des Hohlraums (210) zusammenläuft.

9. Vorrichtung (1) nach mindestens Anspruch 5, wobei der Hohlraum (210) mindestens einen nicht-kreisförmigen Querschnitt entlang einer Ebene senkrecht zur Hauptachse (2a) definiert und der erste Abschnitt (20) einen Schnitt entlang einer Ebene senkrecht zur Hauptachse (2a) definiert, der zumindest teilweise gegenförmig zum Hohlraum (210) ist, sodass die gegenseitige Rotation der Abschnitte (20, 21) in Bezug auf die Hauptachse (2a) gesperrt wird.

10. Vorrichtung (1) nach einem der vorhergehenden Ansprüche, wobei ein oder mehrere künstliche Zähne (3) an dem ersten Abschnitt (20) befestigt sind und wobei der zweite Abschnitt (21) direkt oder indirekt an dem Knochenabschnitt befestigt ist.

11. Vorrichtung (1) nach einem der Ansprüche 1 bis 10, wobei ein oder mehrere künstliche Zähne (3) an dem zweiten Abschnitt (21) befestigt sind und wobei der erste Abschnitt (20) direkt oder indirekt an dem Knochenabschnitt gebunden ist.

12. Prothese (10) umfassend eine feste oder abnehmbare Vorrichtung nach einem der vorhergehenden Ansprüche.

## Revendications

1. Dispositif dentaire (1) comprenant au moins:
- une base (2) définissant un axe principal (2a) et incluant au moins une première portion (20) et une deuxième portion (21), l'une étant configurée pour être contrainte directement ou indirectement sur une portion osseuse d'un utilisateur et l'autre étant configurée pour être contrainte sur une ou plusieurs dents (3),
- des moyens de contrainte (4) définissant au moins une configuration de contrainte où ladite première portion (20) et ladite deuxième portion (21) sont mutuellement contraintes, une configuration de repos où ladite première portion (20) et ladite deuxième portion (21) sont séparables au moins le long dudit axe principal (2a), et comprenant au moins:
- un curseur en forme de coin (40) comprenant au moins en partie un matériau ferromagnétique et mobile le long dudit axe principal (2a) de manière à déterminer, en fonction de son positionnement, ladite configuration de repos et ladite configuration de contrainte,
- un élément mobile (41) au moins partiellement contre-formé par rapport audit curseur (40) et extensible radialement par rapport à l'axe principal (2a) lorsqu'il est poussé par ledit curseur (40) dans ladite configuration de contrainte, et
- un obstacle (42) configuré pour interférer avec ledit élément mobile (41) lorsque lesdits moyens de contrainte (4) sont dans une configuration de contrainte de manière à bloquer la translation réciproque desdites portions (20, 21) le long dudit axe principal (2a),
- ledit curseur (40) et ledit élément mobile (41) étant disposés sur ladite première portion (20) et ledit obstacle (42) étant disposé sur ladite deuxième portion (21) et ledit dispositif (1) **étant caractérisé en ce que**
- ledit curseur (40) inclut un aimant permanent.

2. Dispositif (1) selon la revendication 1, dans lequel lesdits moyens de contrainte (4) comprennent au moins un élément de poussée (43) configuré pour exercer une force de poussée sur ledit curseur (40) de manière que lesdits moyens de contrainte (4) passent de ladite configuration de repos à ladite configuration de contrainte.

3. Dispositif (1) selon la revendication précédente, dans lequel ledit élément de poussée (43) produit une force magnétique sur ledit curseur (40) et est disposé sur l'une desdites portions (20, 21).

4. Dispositif (1) selon l'une quelconque des revendications précédentes, dans lequel un ou plusieurs desdits curseurs (40) et de l'élément mobile (41) comprennent un revêtement externe fait au moins en partie en pierre dure pour réduire le frottement entre ledit curseur (40) et ledit élément mobile (41).

5. Dispositif (1) selon l'une quelconque des revendications précédentes, dans lequel ladite deuxième portion (21) comprend une cavité (210) s'étendant au moins partiellement le long dudit axe principal (2a) et configurée pour loger au moins une partie de ladite première portion (20) et ledit obstacle (42) est inclus dans ladite cavité (210).

6. Dispositif (1) selon l'une quelconque des revendications précédentes, comprenant un support (5) pouvant être fixé à une portion osseuse d'un utilisateur et dans lequel ladite deuxième portion (21) est constituée par ledit support (5) ou est configurée pour être contrainte audit support (5).

7. Dispositif (1) selon la revendication précédente, dans lequel ladite deuxième portion (21) est constituée par ledit support (5) et ledit obstacle (42) est constitué par une cloison conique (420) disposée à l'intérieur de ladite cavité (210) et convergeant par rapport audit axe principal (2a) vers une ouverture de ladite cavité (210).

8. Dispositif (1) selon au moins la revendication 5, dans lequel ladite cavité (210) définit au moins un segment sphérique (421) et ledit obstacle (42) est constitué au moins par ledit segment sphérique (421) convergeant par rapport audit axe principal (2a) vers une ouverture de ladite cavité (210).

9. Dispositif (1) selon au moins la revendication 5, dans lequel ladite cavité (210) définit au moins une section non circulaire le long d'un plan perpendiculaire audit axe principal (2a) et ladite première portion (20) définit une section le long d'un plan perpendiculaire audit axe principal (2a) au moins partiellement contre-formée par rapport à ladite cavité (210) de manière à bloquer la rotation réciproque desdites portions (20, 21) par rapport audit axe principal (2a).

10. Dispositif (1) selon l'une quelconque des revendications précédentes, dans lequel une ou plusieurs dents artificielles (3) sont fixées à ladite première portion (20) et ladite deuxième portion (21) est contrainte directement ou indirectement sur ladite portion osseuse.

11. Dispositif (1) selon l'une quelconque des revendications 1 à 10, dans lequel une ou plusieurs dents artificielles (3) sont contraintes à ladite deuxième portion (21) et ladite première portion (20) est liée directement ou indirectement sur ladite portion osseuse.

12. Prothèse (10) comprenant un dispositif fixe ou amovible selon l'une quelconque des revendications précédentes.
